# EUROPEAN PATENT SPECIFICATION

(11) **EP 4 321 998 B1**
(45) Date of publication and mention of the grant of the patent: **18.11.2026**
(21) Application number: 23190694.2
(22) Date of filing: 09.08.2023
(51) Int. Cl.: G06F 9/455, G06F 9/48, G06F 9/46

(54) **PERFORMANCE OPTIMIZED TASK DUPLICATION AND MIGRATION**
LEISTUNGSOPTIMIERTE AUFGABENDUPLIZIERUNG UND -MIGRATION
DUPLICATION ET MIGRATION DE TÂCHES OPTIMISÉES EN TERMES DE PERFORMANCES

(30) Priority: 10.08.2022 US 202263396693 P; 11.07.2023 US 202318220536
(43) Date of publication of application: 14.02.2024
(73) Proprietor: Google LLC, Mountain View, CA 94043 (US)
(72) Inventor: MASTERS, Jonathan Charles, Mountain View, CA 94043 (US)
(74) Representative: Betten & Resch

(56) References cited:
- US-A1- 2011 265 084
- US-A1- 2015 234 687
- LE TUAN: "A survey of live Virtual Machine migration techniques", COMPUTER SCIENCE REVIEW, ELSEVIER, AMSTERDAM, NL, vol. 38, 11 September 2020 (2020-09-11), XP086364292, ISSN: 1574-0137, [retrieved on 20200911], DOI: 10.1016/J.COSREV.2020.100304

## Description

### CROSS-REFERENCE TO RELATED APPLICATIONS

The present application claims the benefit of the filing date of U.S. Provisional Patent Application No. 63/396,693, filed August 10, 2022.

### BACKGROUND

Startup time for certain software applications is an important, if not critical, component in providing a satisfactory, low latency user experience. Such experiences may be impacted, for example, when using functions as a service in a cloud or distributed computing environment as the same function is often copied and instantiated multiple times. Such experiences may also be impacted where live migration is employed. For instance, central processing units typically contain information about the context of a running application or program, and/or virtual machine (VM), that is lost when that application is copied/cloned or migrated. This information, for example, may include context about virtual to physical memory translations, branch prediction histories, etc., that need to be reconstructed in a new context when an application or VM restarts as a result of cloning or migration. Having this information available at the time an application or program is instantiated may impact startup times.

US 2011/265084 A1 discloses a system, method and computer program for transferring a running virtual machine from a first to a second physical machine, where each of the physical machines has a different instruction set architecture.

US 2015/234687 A1 discloses techniques related to thread migration across processing cores of a multi-core processor.

### SUMMARY

The invention is defined in the independent claims. The dependent claims define embodiments thereof.

Aspects of the technology are directed to methods and systems that enable duplication of micro-architectural context information when a running application is cloned, *e.g.,* for a faster function start up, migrated, *e.g.,* to another core or machine, or persisted into secondary storage. Micro-architectural context information generally includes information associated with or resident on a processor running an application. Duplicating this information as part of a cloning, migration or storage operation allows subsequent instantiation of the application to occur more quickly as the new processor or virtual machine may use the duplicated or copied context information in instantiating and/or running the application.

An aspect of the disclosed technology comprises a microprocessor that includes logic capable of duplicating microarchitectural context information of running applications or programs, VMs, and other software that is in the process of being cloned, *e.g.,* for a faster function startup, migrated to another machine, or persisted into secondary storage. In one example, the microprocessor, processing element, or processor walks through its internal translation lookaside buffer (TLB), branch predictor, and other internal state machines, and extracts the internal state of the microprocessor. The internal state is then copied into a virtually addressed memory buffer and passed to an operating system (OS), which can pass such information to a destination, e.g., another host, OS, or processor, for improved speed in restoring the microarchitecture state.

An aspect of the disclosed technology is a method comprising extracting microarchitectural information from a first processing element associated with a program running on the first processing element; transferring the extracted microarchitectural information to a first operating system associated with the first processing element; forwarding, by the first operating system, the extracted microarchitectural information to a second processing element; and instantiating a process at the second processing element using the extracted microarchitectural information. In accordance with this aspect of the technology, the extracted microarchitectural information comprises information about the internal states of the first processing element. The extracted microarchitectural information comprises information associated with a translation lookaside buffer (TLB) or a branch predictor buffer. In addition, forwarding may be performed as part of cloning the program on the second processing element. Forwarding may be performed as part of migrating the program to the second processing element. Further still, instantiating the process comprises receiving the extracted microarchitectural information at a second operating system associated with the second processing element and transferring, by the second operating system, the extracted microarchitectural information to the second processing element.

Further in accordance with the method, the first processing element and the second processing element may reside on a first host machine. The first processing element may reside on a first host machine and the second processing element resides on a second host machine. The first host machine serves a source node for a live migration event and the second processing element serves a target node for the live migration event.

An aspect of the disclosed technology is a system comprising a first processing element running a program, the first processing element extracting microarchitectural context information associated with the program; and wherein the first operating system communicates the extracted microarchitectural information to a second processing element. The second processing element instantiates the program using the extracted microarchitectural information. The extracted microarchitectural information comprises information about the internal states of the first processing element. The extracted microarchitectural information comprises information associated with a translation lookaside buffer (TLB) or a branch predictor buffer.

In accordance with this aspect of the disclosed technology, the first processing element communicates the extracted microarchitectural information as part of cloning the program on the second processing element. The first processing element may communicate the extracted microarchitectural information as part of migrating the program to the second processing element.

In addition, a second operating system associated with the second processing element receives the extracted microarchitectural information and transfers the extracted microarchitectural information to the second processing element. The first processing element and the second processing element may reside on a first host machine. The first processing element may reside on a first host machine and the second processing element resides on a second host machine. The first host machine may serve a source node for a live migration event and the second processing element serves a target node for the live migration event.

### BRIEF DESCRIPTION OF THE DRAWINGS

Figure 1 illustratively depicts a method or process in accordance with an aspect of the disclosed technology.
Figure 2 illustratively depicts a processing element in accordance with an aspect of the disclosed technology.
Figure 3 illustratively depicts a system in accordance with an aspect of the disclosed technology.
Figure 4 illustratively depicts a cloud computing environment or distributed system in accordance with an aspect of the disclosed technology.
Figure 5 is schematic view of an example computing device in accordance with an aspect of the disclosure.

### DETAILED DESCRIPTION

The technology is more specifically directed to capturing micro-architectural information associated with applications running in a cloud platform or distributed computing architecture type environment. There are two example use cases that may be used to illustrate application of the technology. The first use case involves live migration of a virtual machine or application, and the second use case involves replicating an application or virtual machine, *e*.*g*., implementing function as service, such as where a relatively small JavaScript code performs a function on a web page. The disclosed technology is directed to copying context information at the microarchitectural level and communicating that information from a source micro-processor to a target microprocessor employed to run another instantiation of the application or function.

For example, when an application is running in a cloud or distributed computing architecture type environment, information that captures how the virtual memory space maps to the physical memory space is kept and regularly updated at the hardware level. When live migration occurs, transferring this microarchitectural data to the target machine could be beneficial. Specifically, a source that is running a virtual machine keeps track of how the virtual memory translates to the physical memory. This detail is typically tracked in a translation lookaside buffer (TLB). The information in that buffer is typically not transferred in current live migration methodologies because such information is typically kept secret by the processor. The disclosed technology includes capturing and transferring this information as part of a live migration.

This may be beneficial because the information in the TLB informs the processor where to access particular datums of information used by an application running on the virtual machine. While the target machine may recreate the microarchitectural state associated with the TLB, that takes time, which slows down the process. This is particularly true because TLBs tend to be large. By capturing and providing this microarchitectural data to the target, the target then uses it to recreate the mappings to its physical memory without having to determine the microarchitectural state of the virtual memory at the source.

The technology may be implemented, for example, as a method in which a processor that is running an application polls, accesses, or walks through its TLB, branch predictor, and/or other internal state machines to extract the internal state of these machines. The extracted state or micro-architectural context information is then copied into a virtually addressed memory buffer and passed to an operating system, *e.g.,* host operating system. The operating system then transfers that information to a target or destination node, *e.g.,* another host machine or operating system, processor, or storage. At the target or destination node, the state or micro-architectural context information is then used for restoring the state or micro-architectural context information to reflect what it was at the original node from which the information was copied. This will result in being able to more quickly instantiate the application that was cloned, migrated, or move to storage.

The foregoing example is described with reference to a virtually addressed or indexed memory buffer(s). In other examples, the technology may be implemented using a physical addressed or indexed memory buffer(s). In addition, such buffers may be contiguous or non-contiguous.

As another example use case, the technology may be employed so as to increase the speed at which an application is instantiated. For instance, web functions are often implemented via programs, *e.g.,* a relatively small number of lines of code or Java Script - micro-program, that are instantiated on a cloud platform via VMs. A host may have to copy the microprogram multiple times as part of providing a function as a service. Multiple instances of these programs may run on the same processor. In an aspect of the technology, the micro-architectural state of a processor running the micro-program may be copied and stored so as to allow subsequent instances of the program to be instantiated more quickly. In this regard, the processor may generate a list of states based on the memory buffer in the processor address space. These states may comprise translations of virtual memory to physical memory residing in the TLB, which would provide a listing of the memory addresses that are currently being used. The virtual addresses and physical addresses may be returned to the operating system, which may then use them in creating new instances of the program or web function. By providing microarchitectural information in the TLB, the processor address state for new copies of the program need not be recreated for each instance of the microprogram.

Another aspect in which the disclosed technology applies is branch predictors. In programming, every five instructions or so causes a branch. This results in requiring predictions ahead of time. The branch predictor has a buffer that stores these predictions. If these predictions are transferred as part of live migration or copying when using functions as a service, time may be saved when instantiating new copies of the program.

The disclosed technology may be implemented in hardware via transistor logic. It may also be implemented in microcode.

Transferal of micro-architectural details is generally considered unfeasible today because such information necessarily resides at the chip level and even if collected, is not extracted and passed up to the OS because the assumption is that those details will not be useful at another node in a distributed type computing environment. This information is usually regarded as proprietary. This is the case because integrated circuits (ICs) or processors are provided by a different entity than the network or cloud provider. In effect, different entities supply different components to the systems and given that there is no guarantee that, for example, there will be similar hardware, *e.g.,* processor, at the target node and the IC vendor wants to protect its proprietary information, there is disincentive to copy and pass this information up through the hardware and software architecture to another node. However, when such information is copied and passed through to another node, it may prove beneficial in terms of performance, *e.g.,* speed, reliability.

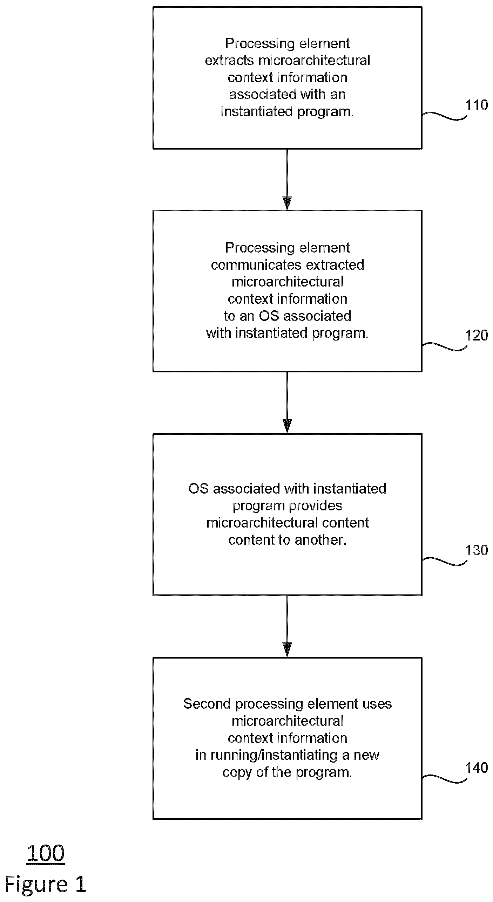

Figure 1 illustratively depicts a method or process 100 in accordance with an aspect of the disclosed technology. The process comprises extracting, using a processing element, microarchitectural context information associated with an instantiated program or application running on the processing element, as indicated via processing block 110. Extracting may comprise reading, selecting, polling, or obtaining information from the TLB, branch predictor buffers, and/or, more generally, and how the elements within a processing element are logically interconnected in implementing the program. As discussed in more detail below, a processing element may comprise a microprocessor, processor, processing device or combination of circuit elements, *e.g.,* an integrated circuit, configured to carry out or perform instructions associated with the program or application. A microarchitecture may comprise the digital logic used to execute a given instruction set architecture (ISA). The instruction set architecture generally comprises the programming model of the processor and includes, for example, instructions, an execution model, registers, address and data formats, as well as other elements that make up the processor/processing element/processing device. The microarchitecture comprises the elements within a processor/processing element/processing device and how these elements connect and operate to implement the instruction set architecture. The microarchitecture may comprise a combined implementation of registers, memory, arithmetic logic units, multiplexers, translation lookaside buffer (TLB), branch predictors, and any other digital logic blocks or elements. Together, these digital logic blocks or elements form a processing element, processing device, microprocessor, or processor. The terms processing element, processing device, microprocessor, or processor are used synonymously unless indicated otherwise.

The instructions associated with a program or application instantiated or running on a processing element is implemented within the framework of the instruction set architecture of the processing element. This results in a sequence of operations implemented via one or more digital logic blocks associated with the processing element. Implementation of the program within a given instruction set architecture creates information about the context of the running program, or VM. Unless preserved, *e.g.,* copied, this information is lost if the program or VM is migrated or is cloned (*e*.*g*., when the program is run for another client).

In an aspect of the disclosed technology, the processing element communicates the microarchitectural information to an operating system (OS) associated with the processing element and/or program, as indicated via processing block 120. This processing element may be considered a source or first processing element. This processing element may communicate the microarchitectural information to the OS by sending the information to the OS via internal buses within a host computer. Alternatively, the processing element may store the microarchitectural information at a storage location accessible by the OS, *e.g.,* one or more virtually addressed memory buffer. The processing element may also, as another alternative, make use of one or more physical addressed or indexed memory buffer(s)

The OS then provides the microarchitectural information to second or target processing element that may make use of it in running another instantiation of the program, as indicated at processing block 130. As is discussed in more detail below, the target processing element may comprise a processing element residing in the same host as the source processing element that extracted the information. Alternatively, it may comprise a processing element in a different host, *e.g.,* a different host in the same data center or in a different data center.

Upon receipt of the microarchitectural information, the second or target processing element instantiates a copy of the program or application using the microarchitectural information, as indicated processing block 140. In accordance with this aspect of the disclosure, because the microarchitectural information at the source processing element is provided to the target processing element, the context information associated with the source processing element is used to more efficiently instantiate and run the program at the target. This may prove advantageous in situations where multiple copies of a program or VM are run to provide the same functions to different clients. This may also prove advantageous where a program or VM is migrated to a different host as part of live or non-live migration. In either of these use cases, the target OS may preserve the microarchitectural information and make it available as required. Regardless of the use case, the disclosed technology allows for improvements in the speeds in which new instantiations of a program or application need to be run on a processing element. This occurs primarily because of the availability of the microarchitectural context information at the target processing element. As such, the target processing element need not generate such context information from scratch.

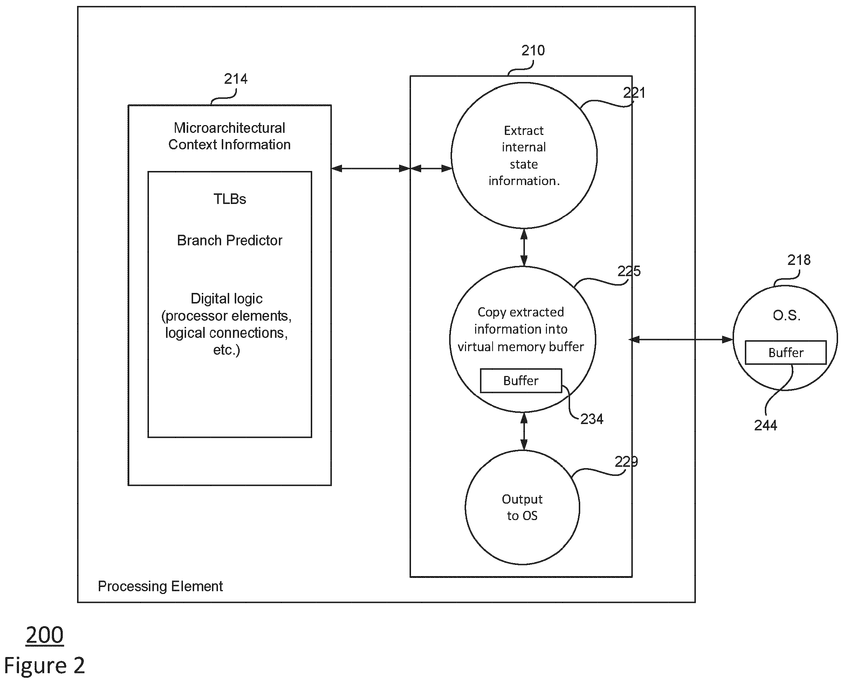

Figure 2 illustratively depicts a processing element 200 in accordance with an aspect of the disclosure. The processing element 200 typically resides in a host machine. The host machine may include more than one processing element 200. Each processing element 200 within the host machine may separately communicate with the OS in implementing VMs. The processing element 200 includes a logic function 210 that is coupled to a microarchitectural context information block 214 and an OS 218. Logic function 210 includes a function to extract internal state information 221, copy the extracted state internal information 225 and output the copied state internal information 229 to the OS 218. As shown, the copy function 225 includes a buffer 234. Buffer 234 may comprise a virtually addressed memory buffer that stores the copied state internal information.

The extract function 221 obtains, *e.g.,* reads, polls, pulls, or accesses, microarchitectural context information from microarchitectural context information block 214. The microarchitectural information is depicted at block 238 as comprising TLB, branch prediction, or more generally digital logic information associated with a program or application running or instantiated on processing element 200. This information may reside in buffers on the processing element 200 that make up, for example, microarchitectural context information block 214. As discussed, processing elements are equipped with TLB and branch predictor buffers that track how the virtual memory tracks to the physical memory and branch history of the instructions running on the processing element 200. In addition, microarchitectural context information block 214 may also include a buffer that tracks the digital logic of programs or applications running on the processing element. Digital logic information may comprise for example the connections or process flow between ALUs, registers, caches, memories, schedulers, etc. on processing element 200 as it operates to implement one or more instructions, *e.g.,* an assembly program, associated with the program or application. In general, the microarchitectural context information comprises information that allows an instruction set to be executed.

Once this information is extracted by extract function 221, it is copied or stored as part of copy function 225. As previously discussed, the extracted microarchitectural context information may be stored in a virtual memory buffer 234. As indicated via functional block 229 this information may then be output to OS 218. For example, the microarchitectural context information may be output on a data bus within processing element 200 to a location, *e.g.,* in memory such as for example RAM, where it can be retrieved by OS 218. Alternatively, OS 218 may read the information in buffer 234. In this latter case, output function 229 may comprise input/output (I/O) interface that fetches the information from the buffer based on an OS read request and presents that information to OS 218. Once OS 218 obtains the microarchitectural context information it may then store it in a buffer 244, which may also be a virtual memory buffer, and associate with the program or application that is associated with the microarchitectural context information. OS 218 may, for example, store the microarchitectural context information as part of a memory map associated with the program or application running on processing element 200. OS 218 may then use this information when it instantiates another copy of the program or migrates services running from a first host to another host.

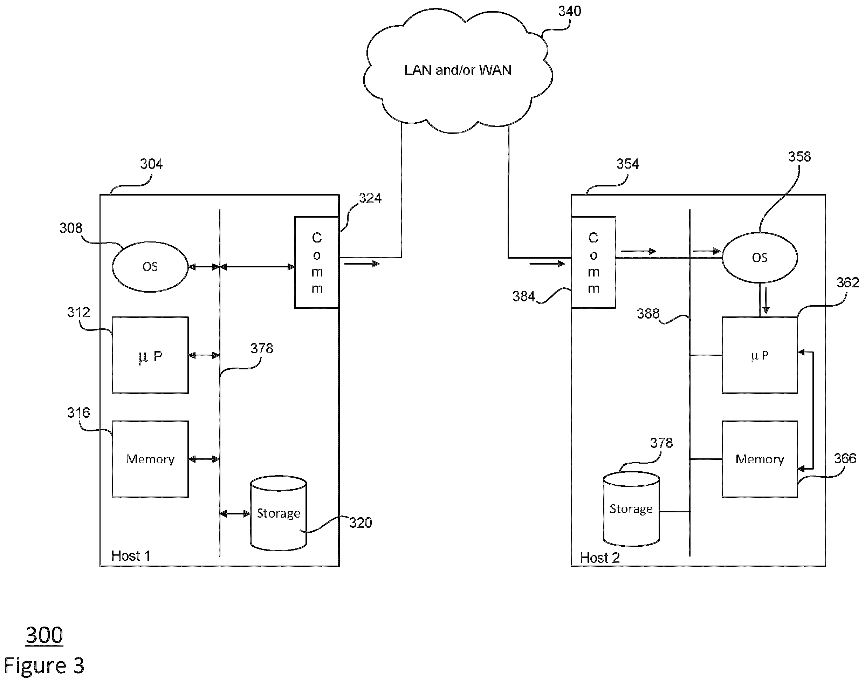

For instance, Figure 3 illustratively depicts a system 300 in which microarchitectural context information is transferred between host machines. First or source host machine 304 includes OS 308, processing element 312, memory 316, storage 320 and a communication interface 324. While only one processing element 312 is shown in first host machine 304 (as well as second host machine), a host machine may include several processing elements. As such, the disclosed technology may include a use case where a first or source processing element and a second or source processing element reside in the same host.

In accordance with an aspect of the disclosed technology, processing element 312 in host 304 is configured in accordance with processing element 200 of Figure 2. As such, processing element 312 extracts microarchitectural context information associated with programs or applications that are running on host machine 304 and use processing element 312. Processing element 312 may, for example, be used to instantiate one or more VMs that is supporting a cloud based service for one or more clients. Processing element 312 and OS 308 may then communicate so that the microarchitectural information is copied and stored where it is outputted or accessible to OS 308. The functions of extracting, copying, and allowing OS 308 to access the microarchitectural context information may take place using bus 328.

Specifically, processing element 312 may extract the microarchitectural context information associated with its digital logic in the context of a programming running on it and communicate the extracted information over bus 328 to memory 316. Memory 316 may comprise physical memory, *e.g.,* RAM, which is mapped to virtual memory accessible by OS 308. In other words, memory 316 may be considered a virtual memory map. In this regard, the virtual memory map may comprise an area which includes the microarchitectural context information. OS 308 may then access memory 316 or a correlated memory map and communicate the microarchitectural context information via communication interface 324 to local area network (LAN) and/or wide area network (WAN) 340, where it gets communicated to second or target host 354. Additionally, OS 308 may store the microarchitectural context information in storage 320. That information may be periodically updated in storage 320 in tune with the programs or applications that are running on processing element 312 or as the microarchitectural context information changes. Such updates may also occur periodically, *e.g.,* on the order of clock cycles to milliseconds, seconds, or minutes, or be user settable.

Second or target host 354 may be similarly equipped as first or source host 304. Specifically, second or target host 354 includes OS 358, processing element 362, memory 366 and storage 378. Second or target host 354 may receive microarchitectural context information from source or first host 304. Microarchitectural context information received at target host 354 from a source host may encounter OS 358, which stores in storage 378, for use by processing element 362. In the case of live migration, for example, the microarchitectural context information may be used by target host 354 to instantiate VMs that will replace VMs running a program associated with the microarchitectural context information. In the case of cloning, target host 354 may store the microarchitectural context information in storage 378 and retrieve when it instantiates a VM to support a function or program associated with the microarchitectural context information.

As discussed above, source host 304 and target host 354 may communicate over LAN and/or WAN 340. LAN and/or WAN 340 more generally represents a network 340. In the case where the source host 304 and target host 354 are in the same data center, network 340 may comprise a LAN. In the case where the source host 304 and target host 354 are not in the same data center, network 340 may comprise a LAN and a WAN. Further in this regard, in some instances processing elements 304 and 354 may reside in the same host. More specifically, where a function is copied or cloned, or where multiple instances of a program are being run, both processing elements may be on the same host. Typically, hosts comprise multiple processing elements and are capable of supporting many VMs simultaneously.

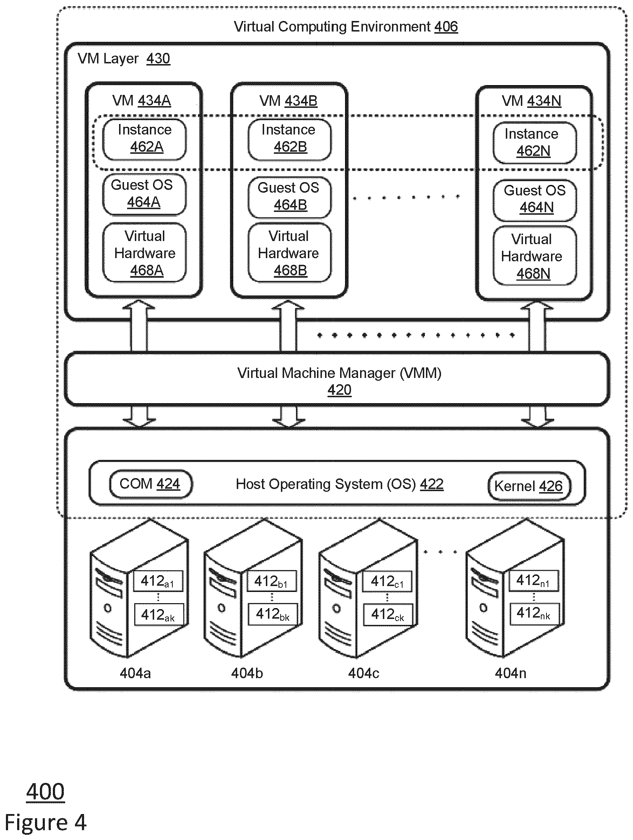

Figure 4 illustratively depicts a cloud computing environment or distributed system 400 in accordance with an aspect of the disclosed technology. The distributed system 400 includes a collection 402 of resources 404 (*e.g.,* hardware resources 404) executing the virtual computing environment 406. The virtual computing environment 404 includes a virtual machine manager (VMM) 420 and a virtual machine (VM) layer 430 running one or more virtual machines (VMs) 434a-n configured to execute instances 462a-n of one or more software applications. Each hardware resource 404 may include one or more physical central processing units (pCPU) 412 ("data processing hardware 112") and memory hardware (not shown for simplicity). Each pCPU 412 may comprise a processing element 200 as described above.

A host operating system (OS) 422 may execute on the collection 402 of resources 402. Host OS 422 includes a communication module 424 and a kernel 426.

In some examples, a virtual machine manager (VMM) 420 corresponds to a hypervisor 420, *e.g.,* a Compute Engine, that includes at least one of software, firmware, or hardware configured to create, instantiate/deploy, and execute the VMs 434. A computer, such as data processing hardware 412, associated with the VMM 420 that executes the one or more VMs 434 may be referred to as a host machine 404, while each VM 434 may be referred to as a guest machine. Here, the VMM 420 or hypervisor is configured to provide each VM 434 a corresponding guest operating system (OS) 464a-n having a virtual operating platform and manage execution of the corresponding guest OS 464 on the VM 434. As used herein, each VM 434 may be referred to as an "instance" or a "VM instance". In some examples, multiple instances of a variety of operating systems may share virtualized resources. For instance, a first VM 434a of the Linux^{®} operating system, a second VM 434b of the Windows^{®} operating system, and a third VM 434n of the OS X^{®} operating system may all run on a single physical host machine.

The VM layer 430 includes one or more virtual machines 434. The distributed system 400 enables a user to launch VMs 434 on demand, *i.e.,* by sending a command to the distributed system 400 via a network, such as network 340. For instance, the command may include an image or snapshot associated with the corresponding operating system 422 and the distributed system 400 may use the image or snapshot to create a root resource for the corresponding VM 434. Here, the image or snapshot within the command may include a boot loader, the corresponding operating system 422, and a root file system. In response to receiving the command, the distributed system 400 may instantiate the corresponding VM 434 and automatically start the VM 434 upon instantiation. A VM 434 emulates a real computer system, *e.g.,* host machine 404. and operates based on the computer architecture and functions of the real computer system or a hypothetical computer system, which may involve specialized hardware, software, or a combination thereof. In some examples, the distributed system 400 authorizes and authenticates the user before launching the one or more VMs 434. An instance 462 of a software application, or simply an instance, refers to a VM 434 hosted on (executing on) the data processing hardware 412 of the distributed system 400.

The host OS 422 virtualizes underlying host machine hardware and manages concurrent execution of one or more VM instances 462. For instance, host OS 422 may manage VM instances 434a-n and each VM instance 434 may include a simulated version of the underlying host machine hardware, or a different computer architecture. The simulated version of the hardware associated with each VM instance 434a-n is referred to as virtual hardware 468a-n. The virtual hardware 468 may include one or more virtual central processing units (vCPUs) ("virtual processor") emulating one or more physical processors 412 of a host machine 304 (Figure 3). The virtual processor may be interchangeably referred to a "computing resource" associated with the VM instance 434. The computing resource may include a target computing resource level required for executing the corresponding individual service instance 462.

The virtual hardware 468 may further include at least one virtual storage device that provides storage capacity for the service on the physical memory hardware (not shown). The at least one virtual storage device may be referred to as a storage resource associated with a VM instance 434. The storage resource may include a target storage resource level required for executing the corresponding individual service instance 462. The guest software executing on each VM instance 434 may further assign network boundaries, *e.g.,* allocate network addresses, through which respective guest software can communicate with other processes reachable through an internal network such as a LAN, an external network such as a LAN, or both (see Figure 3). The network boundaries may be referred to as a network resource associated with the VM instance 434.

The guest OS 464 executing on each VM 434 includes software that controls the execution of the corresponding individual service instance 462a-n of the application running via the VM instance 434. The guest OS 464a-n executing on a VM instance 434a-n can be the same as or different than the other guest OS 464 executing on the other VM instances 434. In some implementations, a VM instance 462 does not require a guest OS 464 in order to execute the individual service instance 462. The host OS 422 may further include virtual memory reserved for a kernel 426 of the host OS 422. The kernel 426 may include kernel extensions and device drivers, and may perform certain privileged operations that are off limits to processes running in a user process space of the host OS 422. Examples of privileged operations include access to different address spaces, access to special functional processor units in the host machine 404 such as memory management units, and so on. A communication process or module 424 running on the host OS 422 may provide a portion of VM network communication functionality and may execute in the user process space or a kernel process space associated with the kernel 426.

In the event of failover request of a VM 434, VMM 420 may determine which of hosts 404 may be used to continue processing the programs or applications running a failed VM. For instance, if VM 434a experiences a condition which requires that it fail over to another VM, *e.g.,* VM 434n, VMM 420 may the provision or commission the resources on host 404n needed to run the programs or applications. As part of this process, microarchitectural context information extracted by pCPU 412a may be communicated to host OS 422 as previously discussed. Host OS 422 may then communicate that information to VMM 420, which may then provide that information to the failover host 404n. Host 404n may then use the microarchitectural context information to set up the digital logic needed to run the failed over application. Depending on the failover condition, it may also be possible to simply use another processing element in the same host to implement the failover request in a similar to that described.

With regard to supporting cloning or copying of a function or running multiple applications of the same program or application, a similar process may be used. For instance, if host 404a is running a program or function and VMM 420 requests a request to instantiate another copy of the program or function, VMM 420 may instruct OS 422 to instantiate the copy of the program or function using the microarchitectural information of the processing element 412a used in running the program.

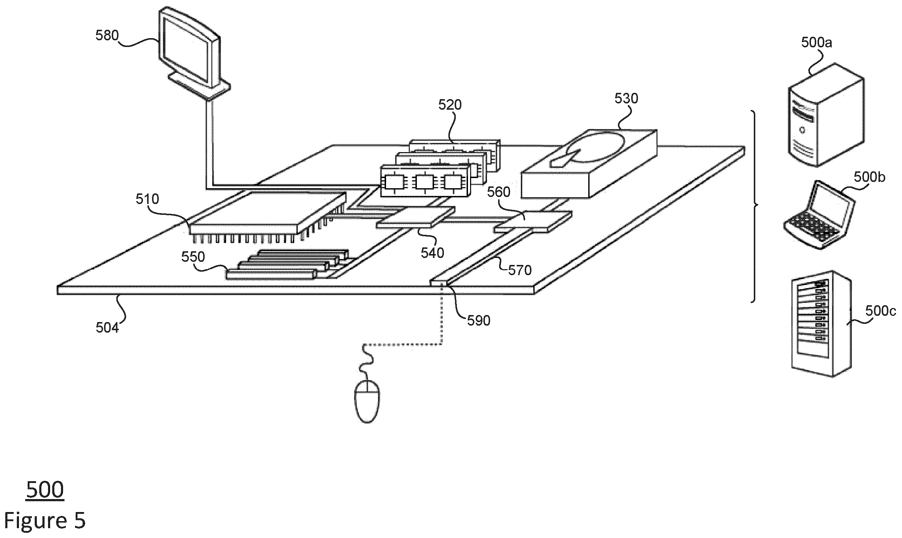

Figure 5 is schematic view of an example computing device 500 that may be used to implement the systems and methods described in this document. The computing device 500 is intended to represent various forms of digital computers, such as laptops, desktops, workstations, personal digital assistants, servers, blade servers, host machines, mainframes, and other appropriate computers. The components shown here, their connections and relationships, and their functions, are meant to be examples only, and are not meant to limit implementations of described and/or claimed in this document. For example, in the context of a server or a host machine, some of the components may reside on a system board in a chassis assembly. In addition, in some examples, the chassis assembly may include multiple such boards.

The computing device 500 includes a processor 510, memory 520, a storage device 530, a high-speed interface/controller 540 connecting to the memory 520 and high-speed expansion ports 550, and a low speed interface/controller 560 connecting to a low speed bus 570 and a storage device 530. Each of the components 510, 520, 530, 540, 550, and 560, are interconnected using various busses, and may be mounted on a common motherboard or in other manners as appropriate. The processor 510 can process instructions for execution within the computing device 500, including instructions stored in the memory 520 or on the storage device 530 to display graphical information for a graphical user interface (GUI) on an external input/output device, such as display 580 coupled to high speed interface 540. In other implementations, multiple processors and/or multiple buses may be used, as appropriate, along with multiple memories and types of memory. Also, multiple computing devices 500 may be connected, with each device providing portions of the necessary operations (*e.g.,* as a server bank, a group of blade servers, or a multi-processor system).

The memory 520 stores information non-transitorily within the computing device 500. The memory 520 may be a computer-readable medium, a volatile memory unit(s), or non-volatile memory unit(s). The non-transitory memory 520 may be physical devices used to store programs (*e.g.,* sequences of instructions) or data (*e.g.,* program state information) on a temporary or permanent basis for use by the computing device

Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (*e.g.,* typically used for firmware, such as boot programs).

Examples of volatile memory include, but are not limited to, random access memory (RAM), dynamic random access memory (DRAM), static random access memory (SRAM), phase change memory (PCM), as well as disks or tapes.

The storage device 530 is capable of providing mass storage for the computing device 500. In some implementations, the storage device 530 is a computer-readable medium. In various different implementations, the storage device 530 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 520, the storage device 530, or memory on processor 510.

By way of example only, the high speed controller 540 manages bandwidth-intensive operations for the computing device 500, while the low speed controller 560 manages lower bandwidth-intensive operations. In some implementations, the high-speed controller 540 is coupled to the memory 520, the display 580 (*e.g.,* through a graphics processor or accelerator), and to the high-speed expansion ports 550, which may accept various expansion cards (not shown). In some implementations, the low-speed controller 560 is coupled to the storage device 530 and a low-speed expansion port 590. The low-speed expansion port 590, which may include various communication ports (*e.g.,* USB, Bluetooth, Ethernet, wireless Ethernet), may be coupled to one or more input/output devices, such as a keyboard, a pointing device, a scanner, or a networking device such as a switch or router, *e.g.,* through a network adapter.

The computing device 500 may be implemented in a number of different forms, as shown in the figure. For example, it may be implemented as a standard server 500a or multiple times in a group of such servers 500a, as a laptop computer 500b, or as part of a rack server system 500c.

Various implementations of the systems and techniques described herein can be realized in digital electronic and/or optical circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications, or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, non-transitory computer-readable medium, apparatus, and/or device, *e.g.,* magnetic discs, optical disks, memory, Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor.

The processes and logic flows described in this specification can be performed by one or more programmable processors executing one or more computer programs to perform functions by operating on input data and generating output. The processes and logic flows can also be performed by special purpose logic circuitry, *e.g.,* an FPGA (field programmable gate array) or an ASIC (application specific integrated circuit). Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, *e.g.,* magnetic, magneto optical disks, or optical disks. However, a computer need not have such devices. Computer-readable media suitable for storing computer program instructions and data include all forms of non-volatile memory, media, and memory devices, including, by way of example, semiconductor memory devices, *e.g.,* EPROM, EEPROM, and flash memory devices; magnetic disks, *e.g.,* internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, *e.g.,* a CRT (cathode ray tube), LCD (liquid crystal display) monitor, or touch screen for displaying information to the user and optionally a keyboard and a pointing device, *e.g.,* a mouse or a trackball, by which the user can provide input to the computer. Other kinds of devices can be used to provide interaction with a user as well; for example, feedback provided to the user can be any form of sensory feedback, *e.g.,* visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible configurations or arrangements of the disclosed subject matter. Further, the same reference numbers in different drawings can identify the same or similar elements.

## Claims

1. A computer-implemented method, comprising:
extracting (110) microarchitectural information from a first processing element (312) associated with a program running on the first processing element (312), wherein the extracted microarchitectural information comprises information about internal states of the first processing element including information associated with a translation lookaside buffer, TLB, or a branch predictor buffer;
transferring (120) the extracted microarchitectural information to a first operating system (308) associated with the first processing element (312);
forwarding (130), by the first operating system (308), the extracted microarchitectural information to a second processing element (362); and
instantiating (140) a copy of the program at the second processing element (362) by restoring, at the second processing element (362), a microarchitectural state using the extracted microarchitectural information, wherein instantiating the copy of the program comprises receiving the extracted microarchitectural information at a second operating system associated with the second processing element (362) and transferring, by the second operating system, the extracted microarchitectural information to the second processing element (362).

2. The method of claim 1,
wherein forwarding is performed as part of cloning the program on the second processing element (362); or
wherein forwarding is performed as part of migrating the program to the second processing element (362).

3. The method of claim 1, wherein the first processing element (312) and the second processing element reside on a first host machine (304).

4. The method of claim 1, wherein the first processing element (312) resides on a first host machine (304) and the second processing element resides on a second host machine (354);
wherein, optionally, the first host machine (304) serves as a source node for a live migration event and the second processing element (362) serves as a target node for the live migration event.

5. A system, comprising:
a first processing element (312) running a program, the first processing element (312) extracting microarchitectural context information associated with the program, wherein the extracted microarchitectural information comprises information about internal states of the first processing element (312) including information associated with a translation lookaside buffer, TLB, or a branch predictor buffer; and
a first operating system (308) associated with the first processing element (312), the first operating system (308) accessing the extracted microarchitectural context information,
wherein the first operating system (308) forwards the extracted microarchitectural information to a second processing element (362), and
wherein the second processing element (362) instantiates a copy of the program by restoring, at the second processing element (362), a microarchitectural state using the extracted microarchitectural information, wherein a second operating system associated with the second processing element (362) receives the extracted microarchitectural information and transfers the extracted microarchitectural information to the second processing element (362).

6. The system of claim 5, wherein the first processing element (312) communicates the extracted microarchitectural information as part of cloning the program on the second processing element (362).

7. The system of claim 5, wherein the first processing element (312) communicates the extracted microarchitectural information as part of migrating the program to the second processing element (362).

8. The system of claim 5, wherein the first processing element (312) and the second processing element reside on a first host machine (304).

9. The system of claim 5, wherein the first processing element (312) resides on a first host machine (304) and the second processing element resides on a second host machine (354);
wherein, optionally, the first host machine (304) serves as a source node for a live migration event and the second processing element (362) serves as a target node for the live migration event.

## Patentansprüche

1. Computerimplementiertes Verfahren, umfassend:
Extrahieren (110) mikroarchitektonischer Informationen aus einem ersten Verarbeitungselement (312), verknüpft mit einem auf dem ersten Verarbeitungselement (312) ausgeführten Programm, wobei die extrahierten mikroarchitektonischen Informationen Informationen über interne Zustände des ersten Verarbeitungselements einschließlich Informationen umfassen, die mit einem Adressumsetzpuffer, TLB, oder einem Verzweigungsprädiktorpuffer verknüpft sind;
Übertragen (120) der extrahierten mikroarchitektonischen Informationen an ein erstes Betriebssystem (308), das mit dem ersten Verarbeitungselement (312) verknüpft ist; Weiterleiten (130) der extrahierten mikroarchitektonischen Informationen durch das erste Betriebssystem (308) an ein zweites Verarbeitungselement (362); und
Instanziieren (140) einer Kopie des Programms an dem zweiten Verarbeitungselement (362) durch Wiederherstellen eines mikroarchitektonischen Zustands an dem zweiten Verarbeitungselement (362) unter Verwendung der extrahierten mikroarchitektonischen Informationen, wobei Instanziieren der Kopie des Programms Empfangen der extrahierten mikroarchitektonischen Informationen an einem zweiten Betriebssystem, das mit dem zweiten Verarbeitungselement (362) verknüpft ist, und Übertragen der extrahierten mikroarchitektonischen Informationen durch das zweite Betriebssystem an das zweite Verarbeitungselement (362) umfasst.

2. Verfahren nach Anspruch 1,
wobei Weiterleiten als Teil des Klonens des Programms auf dem zweiten Verarbeitungselement (362) durchgeführt wird; oder
wobei Weiterleiten als Teil des Migrierens des Programms zu dem zweiten Verarbeitungselement (362) durchgeführt wird.

3. Verfahren nach Anspruch 1, wobei sich das erste Verarbeitungselement (312) und das zweite Verarbeitungselement auf einer ersten Host-Maschine (304) befinden.

4. Verfahren nach Anspruch 1, wobei sich das erste Verarbeitungselement (312) auf einer ersten Host-Maschine (304) befindet und sich das zweite Verarbeitungselement auf einer zweiten Host-Maschine (354) befindet;
wobei optional die erste Host-Maschine (304) als Quellknoten für ein Live-Migrationsereignis dient und das zweite Verarbeitungselement (362) als Zielknoten für das Live-Migrationsereignis dient.

5. System, umfassend:
ein erstes Verarbeitungselement (312), das ein Programm ausführt, wobei das erste Verarbeitungselement (312) mit dem Programm verknüpfte mikroarchitektonische Kontextinformationen extrahiert, wobei die extrahierten mikroarchitektonischen Informationen Informationen über interne Zustände des ersten Verarbeitungselements (312) einschließlich Informationen umfassen, die mit einem Adressumsetzpuffer, TLB, oder einem Verzweigungsprädiktorpuffer verknüpft sind; und
ein erstes Betriebssystem (308), das mit dem ersten Verarbeitungselement (312) verknüpft ist, wobei das erste Betriebssystem (308) auf die extrahierten mikroarchitektonischen Kontextinformationen zugreift,
wobei das erste Betriebssystem (308) die extrahierten mikroarchitektonischen Informationen an ein zweites Verarbeitungselement (362) weiterleitet und
wobei das zweite Verarbeitungselement (362) eine Kopie des Programms durch Wiederherstellen eines mikroarchitektonischen Zustands an dem zweiten Verarbeitungselement (362) unter Verwendung der extrahierten mikroarchitektonischen Informationen instanziiert, wobei ein zweites Betriebssystem, das mit dem zweiten Verarbeitungselement (362) verknüpft ist, die extrahierten mikroarchitektonischen Informationen empfängt und die extrahierten mikroarchitektonischen Informationen an das zweite Verarbeitungselement (362) überträgt.

6. System nach Anspruch 5, wobei das erste Verarbeitungselement (312) die extrahierten mikroarchitektonischen Informationen als Teil des Klonens des Programms auf dem zweiten Verarbeitungselement (362) übermittelt.

7. System nach Anspruch 5, wobei das erste Verarbeitungselement (312) die extrahierten mikroarchitektonischen Informationen als Teil des Migrierens des Programms zu dem zweiten Verarbeitungselement (362) übermittelt.

8. System nach Anspruch 5, wobei sich das erste Verarbeitungselement (312) und das zweite Verarbeitungselement auf einer ersten Host-Maschine (304) befinden.

9. System nach Anspruch 5, wobei sich das erste Verarbeitungselement (312) auf einer ersten Host-Maschine (304) befindet und sich das zweite Verarbeitungselement auf einer zweiten Host-Maschine (354) befindet;
wobei optional die erste Host-Maschine (304) als Quellknoten für ein Live-Migrationsereignis dient und das zweite Verarbeitungselement (362) als Zielknoten für das Live-Migrationsereignis dient.

## Revendications

1. Procédé mis en œuvre par ordinateur, comprenant :
l'extraction (110) d'informations microarchitecturales d'un premier élément de traitement (312) associé à un programme s'exécutant sur le premier élément de traitement (312), dans lequel les informations microarchitecturales extraites comprennent des informations sur des états internes du premier élément de traitement comportant des informations associées à un tampon de traduction, TLB, ou à un tampon de prédiction de branchement ;
le transfert (120) des informations microarchitecturales extraites à un premier système d'exploitation (308) associé au premier élément de traitement (312) ;
la transmission (130), par le premier système d'exploitation (308), des informations microarchitecturales extraites à un second élément de traitement (362) ; et
l'instanciation (140) d'une copie du programme au niveau du second élément de traitement (362) par la restauration, au niveau du second élément de traitement (362), d'un état microarchitectural à l'aide des informations microarchitecturales extraites, dans lequel l'instanciation de la copie du programme comprend la réception des informations microarchitecturales extraites au niveau d'un second système d'exploitation associé au second élément de traitement (362) et le transfert, par le second système d'exploitation, des informations microarchitecturales extraites au second élément de traitement (362).

2. Procédé selon la revendication 1,
dans lequel la transmission est réalisée dans le cadre du clonage du programme sur le second élément de traitement (362) ; ou
dans lequel la transmission est réalisée dans le cadre de la migration du programme vers le second élément de traitement (362).

3. Procédé selon la revendication 1, dans lequel le premier élément de traitement (312) et le second élément de traitement résident sur une première machine hôte (304).

4. Procédé selon la revendication 1, dans lequel le premier élément de traitement (312) réside sur une première machine hôte (304) et le second élément de traitement réside sur une seconde machine hôte (354) ;
dans lequel, éventuellement, la première machine hôte (304) sert de nœud source pour un événement de migration en direct et le second élément de traitement (362) sert de nœud cible pour l'événement de migration en direct.

5. Système, comprenant :
un premier élément de traitement (312) exécutant un programme, le premier élément de traitement (312) extrayant des informations contextuelles microarchitecturales associées au programme, dans lequel les informations microarchitecturales extraites comprennent des informations sur des états internes du premier élément de traitement (312) comportant des informations associées à un tampon de traduction, TLB, ou à un tampon de prédiction de branchement ; et
un premier système d'exploitation (308) associé au premier élément de traitement (312), le premier système d'exploitation (308) accédant aux informations contextuelles microarchitecturales extraites,
dans lequel le premier système d'exploitation (308) transmet les informations microarchitecturales extraites à un second élément de traitement (362), et
dans lequel le second élément de traitement (362) instancie une copie du programme par la restauration, au niveau du second élément de traitement (362), d'un état microarchitectural à l'aide des informations microarchitecturales extraites, dans lequel un second système d'exploitation associé au second élément de traitement (362) reçoit les informations microarchitecturales extraites et transfère les informations microarchitecturales extraites au second élément de traitement (362).

6. Système selon la revendication 5, dans lequel le premier élément de traitement (312) communique les informations microarchitecturales extraites dans le cadre du clonage du programme sur le second élément de traitement (362).

7. Système selon la revendication 5, dans lequel le premier élément de traitement (312) communique les informations microarchitecturales extraites dans le cadre de la migration du programme vers le second élément de traitement (362).

8. Système selon la revendication 5, dans lequel le premier élément de traitement (312) et le second élément de traitement résident sur une première machine hôte (304).

9. Système selon la revendication 5, dans lequel le premier élément de traitement (312) réside sur une première machine hôte (304) et le second élément de traitement réside sur une seconde machine hôte (354) ;
dans lequel, éventuellement, la première machine hôte (304) sert de nœud source pour un événement de migration en direct et le second élément de traitement (362) sert de nœud cible pour l'événement de migration en direct.
